# EUROPÄISCHE PATENTSCHRIFT

(11) **EP 0 764 651 B1**
(45) Veröffentlichungstag und Bekanntmachung des Hinweises auf die Patenterteilung: **20.06.2001**
(21) Anmeldenummer: 96113933.4
(22) Anmeldetag: 30.08.1996
(51) Int. Cl.: C07F 9/53

(54) **Verfahren zur Reinigung tertiärer Phosphinoxide**
Process for the purification of tertiary phosphine oxides
Procédé de purification d'oxydes de phosphines tertiaires

(30) Priorität: 31.08.1995 DE 19532051
(43) Veröffentlichungstag der Anmeldung: 26.03.1997
(73) Patentinhaber: BASF AKTIENGESELLSCHAFT, 67056 Ludwigshafen (DE)
(72) Erfinder: Hermeling, Dieter, Dr., 67459 Böhl-Iggelheim (DE); Hugo, Randolf, 68307 Mannheim (DE); Siegel, Hardo, Dr., 67346 Speyer (DE)
(74) Vertreter: Isenbruck, Günter, Dr.

(56) Entgegenhaltungen:
- FR-A- 1 314 706
- US-A- 5 068 426
- JOURNAL OF THE CHEMICAL SOCIETY, - Dezember 1962 LETCHWORTH GB, Seiten 5128-5138, XP002022264 D. HADZI: "Hydrogen Bonding in some Adducts of Oxygen Bases with Acids. Part I."
- Z. ANORG. ALLG. CHEM. (ZAACAB,00442313);81; VOL.477,; PP.101-7, UNIV. DORTMUND;DORTMUND; D-4600/50; FED. REP. GER., XP000615612 THIERBACH D ET AL: "Darstellung sowie Kristall- und Molekularstruktur von 2 (C6H5)3PO. (COOH)2"

## Beschreibung

Die vorliegende Erfindung betrifft ein Verfahren zur Reinigung tertiärer Phosphinoxide indem man Phosphinoxid enthaltende Gemische mit einer Säure und anschließend mit Wasser oder einer Base umsetzt.

Von den tertiären Phosphinen hat das Triphenylphosphin durch seine Ver-wendung in Wittig-Synthesen die größte Bedeutung. Bei dieser Reaktion wird es in Triphenylphosphinoxid umgewandelt. Da der Bedarf an Triphenylphosphin höher ist als der an Triphenyl-phosphinoxid, besteht keine Notwendigkeit für eine separate Synthese des Oxids. Einfacher und kostengünstiger ist es, das aus der Wittig-Synthese stammende Triphenylphosphinoxid zu verwerten. Da dieses Triphenylphosphinoxid verunreinigt ist, ist ein Reinigungsschritt erforderlich. Prinzipiell kann eine solche Reinigung destillativ erfolgen. Bedingt durch einen Schmelzpunkt von 156 bis 158°C und einen Siedepunkt von mehr als 360°C erfordert eine Destillation sehr spezielle, nur in seltenen Fällen vorhandene Apparaturen. Neben einer Destillation bietet sich eine Umkristallisation als Reinigungsmethode an. Bei dieser Methode verbleiben allerdings in der Regel erhebliche Mengen des Produkts in der Mutterlauge und bei einem hohen Grad der Verunreinigung sind mehrfache Umkristallisationen erforderlich. Bei einer Rückgewinnung von Triphenylphosphin aus Triphenylphosphinoxid kommt es aber darauf an, das Oxid möglichst quantitativ und mit wenigen Reinigungsschritten zu erhalten.

U.S. 5,068,426 betrifft die Reinigung von N, N-Dialkylcarbamoylethylphoshinoxid. Dabei wird diese Verbindung mit einem Übergangsmetallsalz der ersten Reihe des Periodensystems der Elemente zur Bildung eines unlöslichen Komplexes umgesetzt, worauf der Komplex vom Reaktionsgemisch abgetrennt wird. Sodann wird der Komplex mit wäßriger Base umgesetzt, um die gereinigte Verbindung zu erhalten. Insbesondere werden Zinksalze zur Komplexbildung eingesetzt. Die Zielverbindung CMPO wird aus einem Reaktionsgemisch getrennt, das ferner sekundäre und tertiäre Phosphinoxide enthalten kann. In den Beispielen 27 bis 36 wird Dioctylphenylphosphinoxid (DOPPO) als Hauptverunreinigung genannt. Damit wird aus einem Reaktionsgemisch, in dem CMPO und DOPPO nebeneinander vorliegen, CMPO selektiv ausgefällt durch Komplexbildung mit Salzen von Elementen der I. Reihe der Übergangsmetalle (Mangan, Kobalt, Nickel, Kupfer, Zink). DPPO wird gerade nicht aus dem Reaktionsgemisch ausgefällt.

Der vorliegenden Erfindung lag daher die Aufgabe zugrunde, den zuvor genannten Nachteilen abzuhelfen, insbesondere ein Verfahren mit möglichst geringen Produktverlusten und einem hohen Reinigungseffekt zu entwickeln.

Demgemäß wurde ein neues und verbessertes Verfahren zur Reinigung tertiärer Phosphinoxide der allgemeinen Formel I 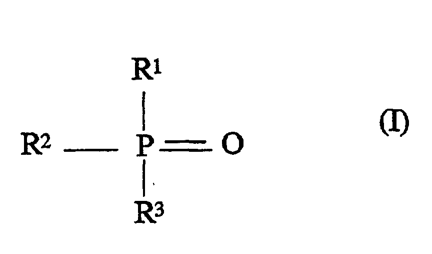 in der R¹, R², R³ C₁- bis C₁₂-Alkyl, C₅- bis C₈-Cycloalkyl oder Aryl, C₇-bis C₂₀-Aralkyl, C₇- bis C₂₀-Alkylaryl bedeutet, gefunden, welches dadurch gekennzeichnet ist, daß man Phosphinoxid I oder Phosphinoxid I enthaltende Gemische gegebenenfalls in einem inerten Lösungsmittel mit einer Mineralsäure oder organischen Säure bei Temperaturen von 0 bis 150°C umsetzt und das entstandene Salz anschließend mit Wasser oder einer anorganischen Base oder einer organischen Base behandelt.

Das erfindungsgemäße Verfahren läßt sich wie folgt durchführen:
Phosphinoxid I oder Phosphinoxid I enthaltende Gemische können mit einer Mineralsäure oder organischen Säure in der Regel bei Temperaturen von 0 bis 150°C, bevorzugt 10 bis 110°C, besonders bevorzugt 20 bis 80°C ohne oder bevorzugt mit einem inerten Lösungsmittel beispielsweise durch Zugabe der Säure umgesetzt und das entstandene Salz abgetrennt und anschließend mit Wasser oder einer anorganischen Base oder einer organischen Base behandelt werden.

Die Umsetzung von tertiären Phosphinoxiden mit Säuren ist z.B. aus JCS (1962), 5128-5138 bekannt.

Als Mineralsäuren eignen sich beispielsweise HCl, HBr, HClO₄, H₂SO₄, H₃PO₄ und als organische Säuren eignen sich beispielsweise Ameisensäure, Essigsäure und Oxalsäure. Vorzugsweise setzt man möglichst preiswerte Säuren wie HCl, H₂SO₄ oder H₃PO₄ ein.

Das Molverhältnis von Mineralsäure oder organischer Säure zum ungereinigten Phosphinoxid I beträgt in der Regel 0,3:1 bis 20:1, bevorzugt 0,7:1 bis 2:1.

Wenn der Gehalt an tertiärem Phosphinoxid I in den Stoffgemischen nicht genau bestimmt werden kann, ist es vorteilhaft, die im Vergleich zum tertiären Phosphinoxid preisgünstigere Säure in einem Überschuß, bevorzugt 5 bis 20 Mol-% einzusetzen.

Als inerte Lösungsmittel eignen sich in der Regel solche, die ein gutes Lösungsvermögen für die tertiären Phosphinoxide I und ein möglichst schlechtes Lösungsvermögen für deren Salze aufweisen wie beispielsweise aromatische Kohlenwasserstoffe z.B. Benzol, Toluol und die Xylole, chlorierte aromatische Kohlenwasserstoffe z.B. Chlorbenzol, Dichlorbenzol, aliphatische Kohlenwasserstoffe wie n-Pentan, Pentanisomerengemische, n-Hexan, Hexanisomerenge-mische, n-Heptan, Heptanisomerengemische, Octan und Octanisomerengemische, cycloaliphatische Kohlenwasserstoffe wie Cyclopentan, Cyclohexan, Cycloheptan und Cyclooctan oder aromatische Nitrile wie Benzonitril.

Die Abtrennung der Salze kann nach dem Auskristallisieren beispiels-weise durch physikalische Trennmethoden, vorzugsweise durch Filtrieren oder Zentrifugieren erfolgen.

In Abhängigkeit von den Reinheitsanforderungen kann das abge-trennte Salz ein- oder mehrmals gewaschen werden. Vorzugsweise verwendet man zum Waschen das eingesetzte inerte Lösungsmittel. Das Salz kann getrocknet werden, wird in der Regel aber lösungsmittelfeucht weiter umgesetzt.

Das freie tertiäre Phosphinoxid I läßt sich aus den Salzen z.B. mit einer anorganischen Base oder eine organischen Base, bevorzugt einer wäßrigen alkalischen Lösung oder einer basisch reagierenden Verbindung z.B. Hydroxide, Carbonate, Formamide, Acetate und C₁- bis C₈-Alkylamin wie NaOH, KOH, Ca(OH)₂, Na₂CO₃, NaHCO₃, Na₂S, NH₃, Natriumformiat, Natriumacetat, Kaliumformiat, Kaliumacetat, Methylamin, Triethylamin und Anilin, bevorzugt NaOH, KOH, Na₂CO₃, NH₃ und Triethylamin, besonders bevorzugt NaOH, NH₃ und Triethylamin oder besonders bevorzugt mit Wasser erhalten.

Das gereinigte tertiäre Phosphinoxid I kann beispielsweise durch Extraktion mit einem inerten Lösungsmittel nach allgemein bekannten Methoden erhalten werden. Die Säure kann anschließend aus der wäßrigen Lösung durch Aufkonzentrieren und Reinigen prinzipiell zurückgewonnen werden.

Die Freisetzung der tertiären Phosphinoxide I aus deren Salzen kann auch thermisch erfolgen. Zweckmäßig ist es, die thermische Spaltung mit einer Destillation zu verbinden. Dabei ist es unerheblich, ob das tertiäre Phosphinoxid oder die Säure bzw. Lewis-Säure die leichter flüchtige Komponente darstellt.

Die Substituenten R¹, R² und R³ in den Verbindungen I haben folgende Bedeutungen:
R¹, R², R³ - unabhängig voneinander, bevorzugt alle gleich,
- C₁- bis C₁₂-Alkyl, bevorzugt C₁- bis C₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Di-methylpropyl, n-Hexyl, iso-Hexyl, sec.-Hexyl, n-Heptyl, iso-Heptyl, n-Octyl, iso-Octyl, besonders bevorzugt C₁- bis C₄-Alkyl wie Methyl, Ethyl, n-Propyl, iso-Propyl, n-Butyl, iso-Butyl, sec.-Butyl und tert.-Butyl,
- C₅- bis C₈-Cycloalkyl wie Cyclopentyl, Cyclohexyl, Cycloheptyl und Cyclooctyl, bevorzugt Cyclopentyl, Cyclohexyl und Cyclooctyl, besonders bevorzugt Cyclopentyl und Cyclohexyl,
- Aryl wie Phenyl, 1-Naphthyl, 2-Naphthyl, 1-Anthryl, 2-Anthryl und 9-Anthryl, bevorzugt Phenyl, 1-Naphthyl und 2-Naphthyl, besonders bevorzugt Phenyl,
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenylpropyl, 3-Phenylpropyl, 1-Phenylbutyl, 2-Phenyl-butyl, 3-Phenylbutyl und 4-Phenylbutyl, besonders bevorzugt Benzyl, 1-Phenethyl und 2-Phenethyl,
- C₇- bis C₂₀-Alkylaryl, bevorzugt C₇- bis C₁₂-Alkylphenyl wie 2-Methylphenyl, 3-Methylphenyl, 4-Methylphenyl, 2,4-Dimethylphenyl, 2,5-Dimethylphenyl, 2,6-Dimethylphenyl, 3,4-Dimethylphenyl, 3,5-Dimethylphenyl, 2,3,4-Trimethylphenyl, 2,3,5-Trimethylphenyl, 2,3,6-Trimethylphenyl, 2,4,6-Trimethylphenyl, 2-Ethylphenyl, 3-Ethylphenyl, 4-Ethylphenyl, 2-n-Propylphenyl, 3-n-Propylphenyl und 4-n-Propylphenyl.

Bevorzugte tertiäre Phosphinoxide der allgemeinen Formel I sind:
Trimethylphosphinoxid, Triethylphosphinoxid, Tributylphosphin-oxid, Trihexylphosphinoxid, Trioctylphosphinoxid, Tricyclohexyl-phosphinoxid, Triphenylphosphinoxid, Tritolylphosphinoxid, Dimethylbutylphosphinoxid, Dimethylhexylphosphinoxid, Dimethyloctylphosphinoxid, Dibutylmethylphosphinoxid, Dibutylhexylphosphinoxid, Dibutyloctylphosphinoxid, Dihexylmethylphosphinoxid, Dihexylbutylphosphinoxid, Dihexyloctylphosphinoxid, Dioctylmethylphosphinoxid, Dioctylbutylphosphinoxid, Dioctylhexylphosphinoxid, DitoIylphenylphosphinoxid, Diphenyltolylphosphinoxid, oder deren Mischungen.

Tertiäre Phosphinoxide wie Triphenylphosphinoxid finden als Flammschutzmittel in Kunststoffen (US-A-4 278 588) oder als Katalysatoren bei Reaktionen mit Phosgen (DE-A-30 19 526) Ver-wendung. Weiterhin können tertiäre Phosphine wie z.B. Triphenyl-phosphin aus ihren Oxiden zurückgewonnen werden (O.Z. 44 237).

### Beispiele

### Beispiel 1

Zu einer Lösung von 375 g (1,35 mol) Triphenylphosphinoxid in 2 625 g Chlorbenzol wurden innerhalb von 30 Minuten 135 g (1,35 mol) 98%ige H₂SO₄ zugetropft und 30 Minuten nachgerührt. Die Kristalle wurden abfiltriert, dreimal mit je 500 ml Chlorbenzol gewaschen und getrocknet. Man erhielt 500,6 g (1,33 mol) Triphenylphosphinoxid-Schwefelsäureaddukt.

Zu 200 g (0,531 mol) des Triphenylphosphinoxid-Schwefelsäureadduktes in 1500 ml Chlorbenzol wurden innerhalb von einer Stunde 1500ml Wasser unter Rühren zudosiert. Nach Phasentrennung wurde die wäßrige Phase dreimal mit je 500 ml Chlorbenzol extrahiert. Nach Entfernung des Lösungsmittels erhielt man 146 g (97,5%) Triphenylphosphinoxid.

### Beispiel 2

Zu einer Lösung von 46,9 g Triphenylphosphinoxid (ca. 70%ig) in 230 ml Chlorbenzol wurden innerhalb von 10 Minuten 6,9 g 98%ige Schwefelsäure getropft. Die Aufarbeitung wurde analog Beispiel 1 durchgeführt und man erhielt 38,3 g Triphenylphosphinoxid-Schwefelsäure-Addukt und hieraus 27,9 g Triphenylphosphinoxid (bezogen auf 70%iges Ausgangsprodukt entspricht dies einer Wiederfindungsrate von 85%).

### Beispiel 3

Zu 25 g eines Destillationsrückstandes, der ca. 50 % Triphenyl-phosphinoxid enthielt, in 75 ml Chlorbenzol wurden bei Raumtempera-tur 2,3 g H₂SO₄ (98 %) zugetropft und 1,5 Stunden nachgerührt. Die Kristalle wurden abgesaugt, zweimal mit 50 ml Chlorbenzol gewaschen und getrocknet. Man erhielt 14 g Triphenylphosphinoxid-Schwefelsäure-Addukt. Das Triphenylphosphinoxid wurde anschließend, wie in Beispiel 1 beschrieben, freigesetzt. Man erhielt 10,2 g Triphenylphosphinoxid.

### Beispiel 4

Zu 20 g (72 mmol) Triphenylphosphinoxid in 50 ml Chlorbenzol wurden 3,3 g (37 mmol) Oxalsäure gegeben und auf 120°C erhitzt. Nach dem Abkühlen wurde das Triphenylphosphinoxid-Oxalsäure-Addukt abgesaugt, mit 50 ml Chlorbenzol gewaschen und getrocknet. Man erhielt 12,9 g (96%) eines 1:1-Adduktes aus Triphenylphosphinoxid und Oxalsäure, Smp.: 105 bis 110°C.

Das [Ph₃POH]⁺[HOOC-COO]⁻ wurde in 100 ml Chlorbenzol suspendiert und mit 100 ml gesättigter NaHCO₃-Lösung versetzt. Nach Phasentrennung wurde die wäßrige Phase zweimal mit je 50 ml Chlorbenzol extrahiert und die organische Phase vom Lösungsmittel befreit. Man erhielt 9,5 g (34 mmol) Triphenylphosphinoxid.

## Patentansprüche

1. Verfahren zur Reinigung tertiärer Phosphinoxide der allgemeinen Formel I 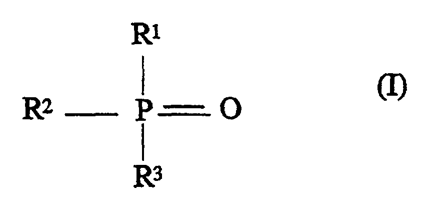 in der R¹, R², R³ C₁- bis C₁₂-Alkyl, C₅- bis C₈-Cycloalkyl oder Aryl, C₇- bis C₂₀-Aralkyl, C₇- bis C₂₀-Alkylaryl bedeutet, dadurch gekennzeichnet, daß man Phosphinoxid I oder Phosphinoxid I enthaltende Gemische gegebenenfalls in einem inerten Lösungsmittel mit einer Mineralsäure oder organischen Säure bei Temperaturen von 0 bis 150°C umsetzt und das entstandene Salz anschließend mit Wasser oder einer anorganischen Base oder einer organischen Base behandelt.

2. Verfahren zur Reinigung tertiärer Phosphinoxide I nach Anspruch 1, dadurch gekennzeichnet, daß man die Umsetzung in einem inerten Lösungsmittel durchführt.

3. Verfahren zur Reinigung tertiärer Phosphinoxide I nach einem der Ansprüche 1 bis 2, dadurch gekennzeichnet, daß man als inertes Lösungsmittel aromatische Kohlenwasserstoffe, chlorierte aromatische Kohlenwasserstoffe, aliphatische Kohlenwasserstoffe cycloaliphatische Kohlenwasserstoffe oder aromatische Nitrile, vorzugsweise Chlorbenzol, einsetzt.

4. Verfahren zur Reinigung tertiärer Phosphinoxide I nach einem der Ansprüche 1 bis 3, dadurch gekennzeichnet, daß R¹, R², R³ Phenylreste sind.

5. Verfahren zur Reinigung tertiärer Phosphinoxide I nach einem der Ansprüche 1 bis 4, dadurch gekennzeichnet, daß Schwefelsäure als Mineralsäure verwendet wird.

6. Verfahren zur Reinigung tertiärer Phosphinoxide I nach einem der Ansprüche 1 bis 4, dadurch gekennzeichnet, daß Oxalsäure als organische Säure verwendet wird.

## Claims

1. A process for the purification of tertiary phosphine oxides of the general formula I 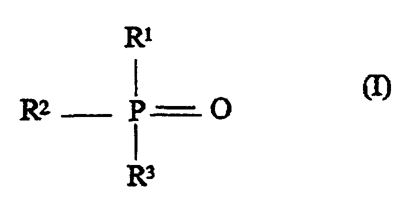 where R¹, R² and R³ are C₁- to C₁₂-alkyl, C₅ to C₈-cycloalkyl or aryl, C₇- to C₂₀-aralkyl or C₇- to C₂₀-alkylaryl, which comprises reacting phosphine oxide I or mixtures containing phosphine oxide I with a mineral acid or organic acid at temperatures of from 0 to 150°C, if desired in an inert solvent, and subsequently treating the resultant salt with water or an inorganic base or an organic base.

2. A process for the purification of tertiary phosphine oxides I as claimed in claim 1, wherein the reaction is carried out in an inert solvent.

3. A process for the purification of tertiary phosphine oxides I as claimed in one of claims 1 and 2, wherein aromatic hydrocarbons, chlorinated aromatic hydrocarbons, aliphatic hydrocarbons, cycloaliphatic hydrocarbons or aromatic nitrites, preferably chlorobenzene, are employed as inert solvent.

4. A process for the purification of tertiary phosphine oxides I as claimed in one of claims 1 to 3, wherein R¹, R² and R³ are phenyl radicals.

5. A process for the purification of tertiary phosphine oxides I as claimed in one of claims 1 to 4, wherein sulfuric acid is used as mineral acid.

6. A process for the purification of tertiary phosphine oxides I as claimed in one of claims 1 to 4, wherein oxalic acid is used as organic acid.

## Revendications

1. Procédé de purification d'oxydes de phosphines tertiaires répondant à la formule générale I : 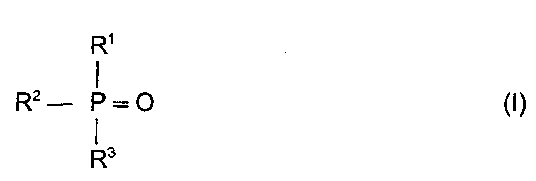 dans laquelle R¹, R², R³ représentent un groupe alkyle en C₁-C₁₂, aryle ou cycloalkyle en C₅-C₈, aralkyle en C₇-C₂₀, ou alkylaryle en C₇-C₂₀, caractérisé en ce qu'on fait réagir de l'oxyde de phosphine I ou des mélanges contenant de l'oxyde de phosphine I, éventuellement dans un solvant inerte, avec un acide minéral ou organique, à des températures de 0 à 150°C, et en ce qu'on traite ensuite le sel formé avec de l'eau ou une base inorganique ou une base organique.

2. Procédé de purification d'oxydes de phosphines tertiaires I suivant la revendication 1, caractérisé en ce qu'on effectue la réaction dans un solvant inerte.

3. Procédé de purification d'oxydes de phosphines tertiaires I suivant l'une des revendications 1 et 2, caractérisé en ce que, comme solvant inerte, on met en oeuvre des hydrocarbures aromatiques, des hydrocarbures aromatiques chlorés, des hydrocarbures aliphatiques, des hydrocarbures cycloaliphatiques ou des nitriles aromatiques, de préférence du chlorobenzène.

4. Procédé de purification d'oxydes de phosphines tertiaires I suivant l'une des revendications 1 à 3, caractérisé en ce que R¹, R² et R³ sont des radicaux phényle.

5. Procédé de purification d'oxydes de phosphines tertiaires I suivant l'une des revendications 1 à 4, caractérisé en ce que, comme acide minéral, on utilise de l'acide sulfurique.

6. Procédé de purification d'oxydes de phosphines tertiaires I suivant l'une des revendications 1 à 4, caractérisé en ce que, comme acide organique, on utilise de l'acide oxalique.
